# FASCICULE DE BREVET EUROPEEN

(11) **EP 1 301 360 B1**
(45) Date de publication et mention de la délivrance du brevet: **25.05.2005**
(21) Numéro de dépôt: 01965067.0
(22) Date de dépôt: 05.07.2001
(51) Int. Cl.: B60C 17/06, B60C 17/10, C10M 169/04, C10M 173/02

(54) **COMPOSITION LUBRIFIANTE POUR UN APPUI DE SECURITE D'UN PNEUMATIQUE EN ROULAGE A PLAT**
SCHMIERMITTELZUSAMMENSETZUNGEN VERWENDBAR ALS NOTLAUFRING FÜR NOTLAUFREIFEN
LUBRICATING COMPOSITION FOR SAFETY SUPPORT OF A TYRE RUNNING FLAT

(30) Priorité: 07.07.2000 FR 0008946
(43) Date de publication de la demande: 16.04.2003
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: SALAUN, Georges, F-63830 Nohanent (FR); MAUCLIN, Jean-Louis, F-63430 Pont du Chateau (FR)
(74) Mandataire: Dequire, Philippe
(86) Numéro de dépôt international: PCT/EP2001/007703
(87) Numéro de publication internationale: WO 2002/004237

(56) Documents cités:
- FR-A- 2 100 803
- FR-A- 2 397 453
- FR-A- 2 746 347

## Description

La présente invention concerne une composition lubrifiante utilisable pour lubrifier une interface entre une enveloppe de pneumatique et un appui de sécurité monté sur une jante de roue à l'intérieur de ladite enveloppe, et un ensemble monté pour véhicule automobile pourvu de ladite composition lubrifiante. L'invention concerne la lubrification entre l'appui et l'enveloppe en roulage à plat, suite à une chute de pression de gonflage à l'intérieur de ladite enveloppe.

Pour retarder, lors du roulage à pression réduite ou nulle (dit roulage à plat) d'une enveloppe de pneumatique, la détérioration par échauffement des zones de frottement entre diverses parties de la face interne de l'enveloppe, on a cherché par le passé à pourvoir la face interne de l'enveloppe d'une composition lubrifiante censée réduire la friction entre ces diverses parties de l'enveloppe.

Ces compositions comprennent essentiellement un agent lubrifiant aqueux, un agent épaississant destiné à élever la viscosité de l'agent lubrifiant de sorte à minimiser le coulage dudit agent lubrifiant en raison de la pesanteur lorsque le véhicule est au repos ou roule avec ses enveloppes de pneumatique à l'état gonflé, et un agent tensio-actif.

Le document de brevet français FR-A-2 100 803 mentionne de telles compositions lubrifiantes pour la lubrification enveloppe/ enveloppe. Chacun des agents lubrifiants décrits dans ce document comprend de l'eau à titre majoritaire et, à titre minoritaire, un composé pour la lubrification tel qu'une huile silicone, de l'éthylène glycol ou de la glycérine. Dans l'exemple de réalisation mentionnant la glycérine, celle-ci est présente dans l'agent lubrifiant et dans la composition lubrifiante selon des fractions volumiques d'environ 30 %, contre 70 % pour l'eau. L'hydroxy-éthylcellulose est citée à titre d'agent épaississant.

On notera que ce volume élevé d'eau est destiné, d'une part, à regonfler par volatilisation l'enveloppe en roulage à plat et ainsi à réduire dans une certaine mesure les contraintes dont les flancs de l'enveloppe sont le siège, et, d'autre part, à optimiser en roulage à plat l'effet moussant du tensio-actif utilisé.

Le document de brevet français FR-A-2 397 453 et le document de brevet japonais JP-B-83/30 000 mentionnent également une composition lubrifiante pour la lubrification enveloppe/ enveloppe qui est destinée à réduire la friction entre les parties supérieures et inférieures de flancs dégonflés. L'agent lubrifiant de la composition appliquée sur les flancs de l'enveloppe comprend de l'eau à titre majoritaire et de l'éthylène glycol à titre minoritaire, comme dans le document FR-A-2 100 803. La composition lubrifiante comprend, à titre d'agent épaississant, un oxyde de polyéthylène et un polysaccharide, et elle comprend en outre une charge fibreuse de type cellulosique.

Plus récemment, on a cherché à améliorer l'endurance des ensembles montés, dans des conditions de roulage à pression de gonflage réduite ou nulle, en prévoyant un appui de sécurité qui est monté sur la jante de roue de manière à pouvoir soutenir la bande de roulement de l'enveloppe en cas de chute de la pression de gonflage. On peut citer le document de brevet français FR-A-2 746 347 pour la description d'un tel appui.

Dans ce contexte, on a testé des compositions lubrifiantes appui/ enveloppe qui sont spécifiquement destinées à réduire la friction entre ledit appui et la face interne de l'enveloppe entourant l'appui, ces compositions étant usuellement appliquées sur la face interne de l'enveloppe, préalablement au montage de celle-ci sur la jante, et dans des conditions de roulage à plat et de charge plus sévères et sur des durées nettement supérieures à celles se rapportant aux tests antérieurs sans appui de sécurité.

A titre de composition lubrifiante pour la lubrification appui/ enveloppe, on peut par exemple citer une composition dont l'agent lubrifiant est à base de polyalcène glycols et de nonylphénol éthoxylé, et d'un agent épaississant.

Une telle composition confère aux ensembles montés les incorporant une endurance satisfaisante en roulage à plat. Cependant, un inconvénient majeur de cette composition réside dans la présence du nonylphénol éthoxylé, qui est un produit irritant pour la peau et les yeux.

La demanderesse a découvert d'une manière surprenante que l'utilisation d'un agent lubrifiant comprenant de la glycérine selon une fraction massique égale ou supérieure à 60 %, dans une composition lubrifiante utilisable pour lubrifier une interface entre une enveloppe de pneumatique et un appui de sécurité monté sur une jante de roue à l'intérieur de ladite enveloppe, ladite composition comprenant essentiellement, d'une part, cet agent lubrifiant, aqueux ou non, et, d'autre part, un polysaccharide destiné à épaissir ledit agent lubrifiant, de telle manière que ledit agent lubrifiant soit présent dans ladite composition selon une fraction massique comprise entre 95 % et 99 %,
permet à la fois d'empêcher le coulage de la composition lubrifiante antérieurement au roulage à plat et d'assurer une lubrification en roulage à plat qui est améliorée par rapport aux compositions lubrifiantes connues, sans que cette composition ne soit gênante à manipuler.

Selon un exemple préférentiel de réalisation de l'invention, la glycérine est présente dans ledit agent lubrifiant selon une fraction massique égale ou supérieure à 70 %, lequel contient également de l'eau selon une fraction massique inférieure ou égale à 30 %.

Selon une autre caractéristique de l'invention, ledit polysaccharide est présent dans ladite composition selon une fraction massique comprise entre 1 % et 2 %.

De préférence, ledit polysaccharide est présent dans ladite composition selon une fraction massique comprise entre 1,5 % et 1,7 %.

On notera que ce domaine spécifique de fraction massique pour ledit polysaccharide permet, d'une manière inattendue et encore plus avantageuse, d'empêcher le coulage de la composition, antérieurement au roulage à plat, et de préserver la lubrification en roulage à plat.

Selon une autre caractéristique de l'invention, cette composition lubrifiante présente une viscosité à 25° C et à la pression atmosphérique, mesurée selon la technique "Brookfield" au moyen d'un mobile de dénomination "LV4", qui est comprise entre 100 000 centipoises et 160 000 centipoises.

Le polysaccharide utilisé à titre d'agent épaississant permet de conférer un caractère thixotrope à la composition lubrifiante selon l'invention.

Selon un exemple de réalisation de l'invention, ledit polysaccharide est une gomme xanthane.

Selon un mode de réalisation de l'invention, la composition lubrifiante comprend au moins un agent tensio-actif qui est présent dans ladite composition selon une fraction massique inférieure ou égale à 0,2 %.

Cet agent tensio-actif permet de conférer à la composition lubrifiante une mouillabilité suffisante sur la face interne de l'enveloppe, et il est par exemple constitué d'un sel d'un métal alcalin d'un acide alkyl aryl sulfonique.

On notera qu'une composition lubrifiante selon l'invention peut comprendre en outre des additifs divers, tels que des colorants, des bactéricides ou des agents de conservation.

Un ensemble monté pour véhicule automobile selon l'invention comporte une jante, un appui de sécurité qui est monté sur ladite jante et dont au moins la face radialement externe est constituée d'un matériau élastomère ou plastique, et une enveloppe de pneumatique montée sur ladite jante autour dudit appui, ladite jante présentant en chacun de ses deux bords périphériques un siège de jante sur lequel est monté un bourrelet de ladite enveloppe, ladite jante comportant entre ses deux sièges une portée recevant ledit appui.

On notera que ladite face radialement externe de l'appui peut être constituée d'une composition de caoutchouc, telle qu'une composition à base de caoutchouc naturel, ou bien d'une matière plastique, telle qu'une matière à base de polyuréthanne, avantageusement à base d'un polyuréthanne thermodurcissable.

Selon l'invention, cet ensemble monté est pourvu, sur la face interne de ladite enveloppe, de ladite composition lubrifiante.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant faite en relation avec les dessins joints, parmi lesquels:
la Fig. 1 est une vue de côté d'un appui de sécurité destiné à être inclus dans un ensemble monté selon l'invention,
la Fig. 2 est une vue en coupe axiale d'un ensemble monté selon l'invention, dans lequel l'appui de la Fig. 1 est monté sur une jante de roue et se trouve en position d'appui contre une enveloppe de pneumatique,
la Fig. 3 est un graphique illustrant l'évolution de l'échauffement interne en roulage à plat de deux ensembles montés respectivement pourvus de deux compositions lubrifiantes selon l'invention, en comparaison d'un ensemble monté pourvu d'une composition lubrifiante non conforme à l'invention,
la Fig. 4 est un graphique illustrant le degré de volatilisation en fonction de la température d'agents lubrifiants selon l'invention,
la Fig. 5 est un graphique illustrant le degré de volatilisation en fonction de la température d'un agent lubrifiant non conforme à l'invention,
la Fig. 6 est un graphique illustrant l'effet d'un vieillissement thermique sur l'endurance en roulage à plat de deux enveloppes respectivement pourvues d'une composition lubrifiante selon un exemple de l'invention et d'une composition lubrifiante connue,
la Fig. 7 est un graphique illustrant l'évolution de l'échauffement interne en roulage à plat de deux ensembles montés respectivement pourvus d'une composition lubrifiante selon l'invention et de ladite composition lubrifiante connue, et
la Fig. 8 est un graphique illustrant l'évolution de l'échauffement interne en roulage à plat de deux ensembles montés respectivement pourvus d'un agent lubrifiant inclus dans une composition lubrifiante selon l'invention et d'un agent lubrifiant non conforme à l'invention.

### Essais comparatifs de compositions lubrifiantes selon l'invention:

Les trois compositions lubrifiantes testées ci-après sont obtenues par mélangeage à la température ambiante d'un agent lubrifiant avec un agent épaississant et un tensio-actif.
- Une composition lubrifiante selon un premier exemple de réalisation de l'invention présente la formulation suivante:
   (la fraction massique de chaque consistant dans la composition est indiquée en %). 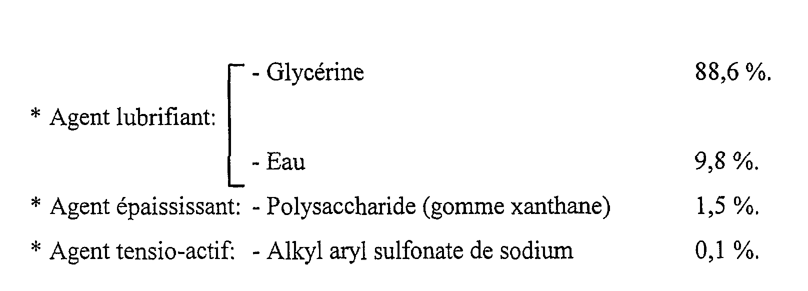
   L'agent épaisissant utilisé est commercialisé par la société RHODIA sous la dénomination " RHODOPOL 23 ", et il est mélangé à l'état de poudre aux autres constituants de cette composition lubrifiante. Le mélangeage est effectué à la température ambiante, du fait que cet agent épaississant est soluble dans l'eau.
   Dans le cas de l'utilisation d'un agent lubrifiant non aqueux pour la composition lubrifiante selon l'invention (c'est-à-dire un agent lubrifiant constitué de glycérine pure), on notera que cet agent épaississant doit être mélangé " à chaud " aux autres constituants non aqueux, pour le dissoudre dans la glycérine. Plus précisément, on doit agiter le mélange pendant environ 15 min. à une température proche de 70° C.
   L'agent tensio-actif utilisé est commercialisé par la société SIDOBRE SINNOVA sous la dénomination " SINNOZAN NS 30 ".
   De plus, cette composition présente une viscosité de 140 000 centipoises (mesurée par la technique " BROOKFIELD " au moyen d'un mobile " LV4 " tournant à une vitesse de 3 tours / minute).
- Une composition lubrifiante selon un second exemple de réalisation de l'invention contient les mêmes constituants que la première composition précitée, mais sa formulation est la suivante (fraction massique de chaque constituant dans la composition est indiquée en %). 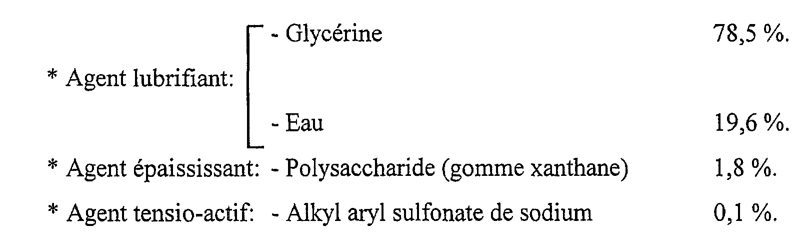
   De plus, cette composition présente une viscosité de 110 000 centipoises (mesurée par la technique " BROOKFIELD et l'appareillage précité).
- Une composition lubrifiante non conforme à la présente invention présente la formulation suivante:
   (la fraction massique de chaque constituant dans la composition est indiquée en %).

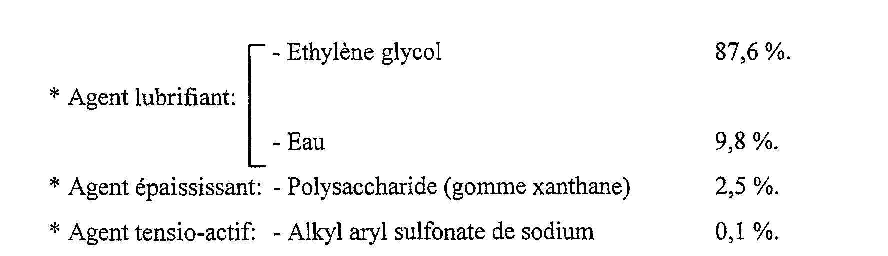

L'agent épaississant et l'agent tensio-actif de cette composition sont ceux les mêmes que ceux cités ci-dessus.

De plus, cette composition non conforme présente une viscosité de 110 000 centipoises (mesurée comme précédemment).

On a pourvu trois enveloppes de pneumatique identiques (de dimensions 205-650 R 440) de 60 g de ladite première composition selon l'invention, de 60 g de ladite seconde composition selon l'invention et de 60 g de ladite composition non conforme à l'invention, respectivement. Plus précisément, on a appliqué chacune des trois compositions lubrifiantes sur une zone médiane de la face interne de l'enveloppe de pneumatique correspondante, zone admettant sensiblement pour plan de symétrie le plan équatorial de l'enveloppe.

Puis on a monté ces trois enveloppes respectivement pourvues des compositions lubrifiantes précitées sur des jantes identiques, un même appui de sécurité élastomère étant au préalable monté sur chaque jante.

Plus précisément, les dimensions caractéristiques de chaque ensemble monté ainsi obtenu, prévu pour pouvoir équiper un véhicule automobile commercialisé sous la dénomination "PEUGEOT 806" sont, en mm, 205 - 650 - 440 (respectivement largeur d'enveloppe- diamètre d'enveloppe - diamètre de jante).

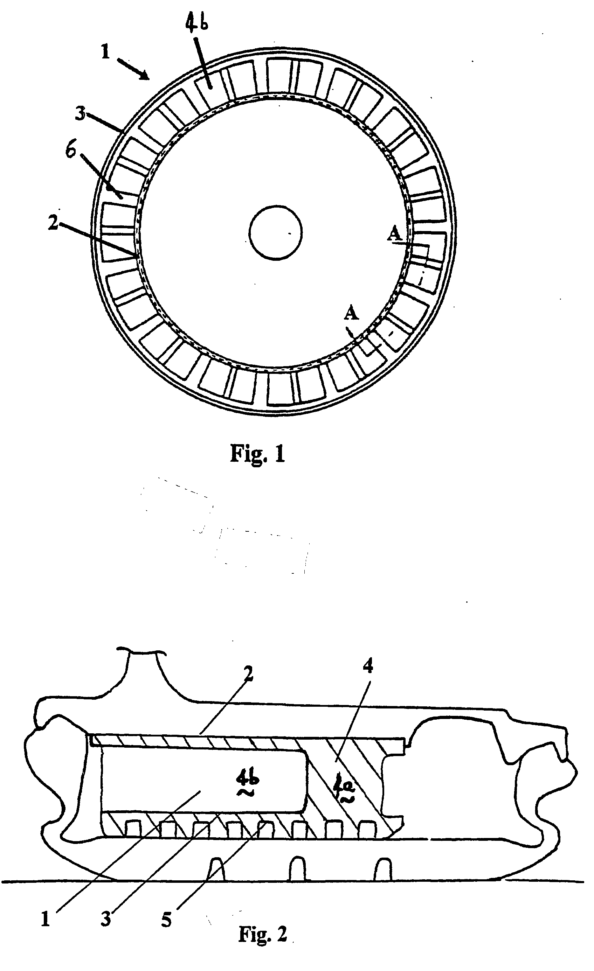

On a utilisé pour chaque jante une jante telle que celle qui est visible à la Fig. 2 (cette jante est également décrite en détail dans le document de brevet français FR-A-2 720 977).

En référence aux Figs. 1 et 2, chacun des appuis 1 testés comprend essentiellement trois parties:
- une base 2, de forme généralement annulaire;
- un sommet 3, sensiblement annulaire, avec sur sa paroi radialement extérieure (de façon optionnelle) des rainures longitudinales 5, et
- un corps annulaire 4 de liaison entre la base 2 et le sommet 3.

La Fig. 2 illustre notamment la fonction d'un appui 1 qui est de supporter la bande de roulement du pneumatique en cas de forte perte de pression de gonflage de celui-ci.

La coupe de la Fig. 2 montre une première partie massive 4a du corps annulaire 4 ainsi qu'une seconde partie 4b constituée d'évidements (voir également Fig. 1) s'étendant axialement sur sensiblement plus de la moitié du corps annulaire 4, en débouchant du côté extérieur dans une direction sensiblement axiale. Ces évidements 4b sont régulièrement répartis sur toute la circonférence du corps annulaire 4 et ils définissent des cloisons 6, lesquelles assurent une liaison radiale directe entre le sommet 2 et la base 3 de l'appui 1.

Cette géométrie a l'avantage de solliciter en flexion et non en compression ces cloisons 6 lorsqu'elles sont écrasées. Les évidements 4b et donc les cloisons 6 sont suffisamment nombreux pour procurer un support régulier lors du roulage sous appui.

Les dimensions caractéristiques en mm de chaque appui 1 (respectivement largeur - diamètre intérieur - hauteur), sont: 135 - 440 - 50.

Plus précisément, chaque appui 1 comporte, sur sa circonférence, 38 cloisons 6 qui présentent chacune une épaisseur de 18 mm, et qui sont deux à deux distantes de 38 mm.

De plus, la base 2 et le sommet 3 présentent des épaisseurs qui sont respectivement égales à 6 mm et à 7 mm. Quant au corps annulaire 4 de chaque appui 1, il présente une largeur (dans la direction axiale) égale à 35 mm. La masse de chaque appui 1 est de 5,7 kg.

Chaque appui 1 comprend une matrice élastomère à base de caoutchouc naturel et une charge renforçante à base de silice hautement dispersible.

◇ On a ensuite procédé à trois essais successifs de roulage à plat d'un véhicule "PEUGEOT 806 " dont la roue avant droite est pourvue pour chaque essai d'un appui tel que celui précité, et d'une enveloppe de pneumatique revêtue de l'une des trois compositions lubrifiantes à tester.

Les conditions de roulage à plat étaient les suivantes pour chacun de ces essais:
- charge sur la roue: 530 kg;
- vitesse moyenne de roulage: 80 km/h;
- distance maximale de roulage: 405 km;
- température ambiante pour le roulage: entre 12° C et 17° C.
- roulage sur un circuit de type autoroutier.

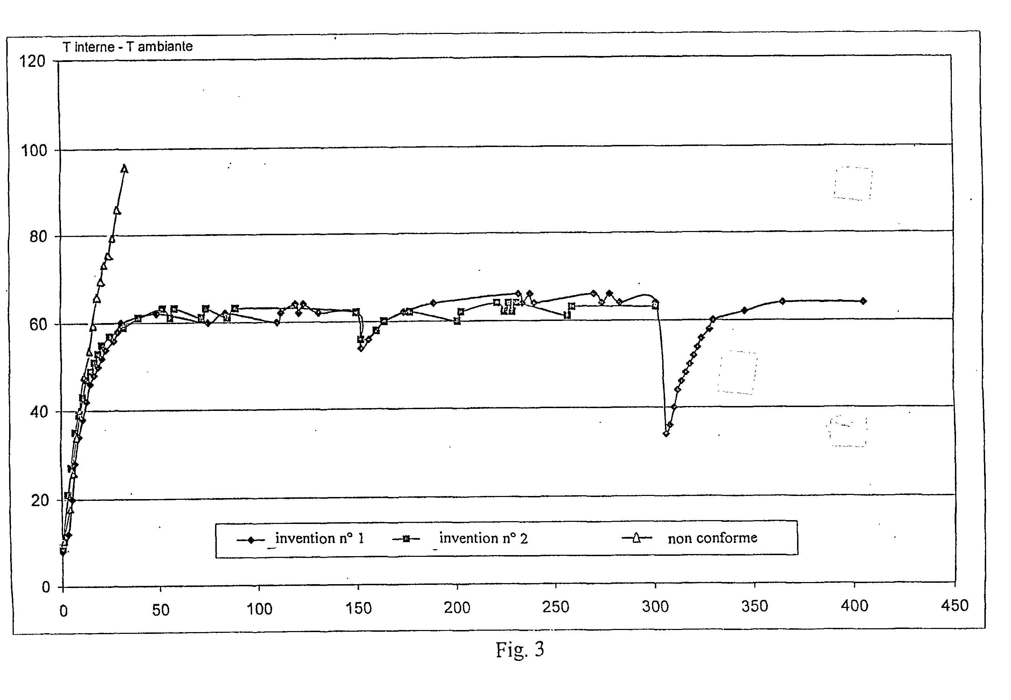

On a représenté à la Fig. 3 l'évolution, en fonction du kilométrage parcouru, de la différence de température entre la température interne à l'intérieur de l'enveloppe du pneumatique avant-droit, qui roule dès l'origine (kilomètre 0) à une pression interne nulle, et la température ambiante ou température extérieure.

On notera que le véhicule a marqué deux arrêts aux kilomètres 150 et 300 pour chacun des trois essais réalisés, ce qui se traduit par une chute de la différence (Tᵢₙₜₑᵣₙₑ - T_{ambiante}) à ces deux distances de roulage.

Il ressort de la Fig. 3 qu'après 10 km de roulage à plat, les ensembles montés selon le premier et le second exemple de l'invention (respectivement " invention n° 1 " et " invention n° 2 " à la Fig. 3) présentent chacun un échauffement interne qui augmente modérément, en comparaison de celui de l'ensemble monté non conforme qui s'échauffe très rapidement pour atteindre au bout de 30 km seulement une température interne d'environ 110° C (différence précitée de 96° C), ce qui impose de stopper le roulage.

En effet, des analyses après 30 km de roulage de cet ensemble monté non conforme ont permis de mettre en évidence, à l'intérieur de l'enveloppe, la formation indésirable de poudrette, un début de destruction de l'appui et une disparition presque totale de la composition lubrifiante à base d'éthylène glycol qui était initialement présente, d'où le niveau élevé d'échauffement observé.

Après ces 30 km de roulage, les deux compositions selon l'invention présentent par contre pour ladite différence une valeur sensiblement constante d'environ 62° C, jusqu'à la fin du roulage (405 km et 300 km environ pour les ensembles montés selon les premier et second exemples de l'invention, respectivement).

En d'autres termes, les compositions lubrifiantes à base de glycérine selon l'invention permettent de conférer aux ensembles montés correspondants une lubrification et, par conséquent, une endurance en roulage à plat très nettement améliorées par à celles conférées par la présence d'un autre agent lubrifiant à base d'éthylène glycol.

On notera par ailleurs que la fraction massique d'agent épaississant (gomme xanthane) dans la composition lubrifiante, qui est de 1,5 % et de 1,8 % dans les premier et second exemples selon l'invention, permet non seulement d'obtenir une lubrification satisfaisante en roulage à plat, mais encore d'éviter le coulage de la composition lubrifiante antérieurement audit roulage à plat (que ce soit lorsque le véhicule est au repos où lorsque l'ensemble monté pourvu de cette composition roule à l'état gonflé).

◇ On a cherché ensuite à comparer le degré de volatilisation en fonction de la température de la glycérine, par rapport à celui de l'éthylène glycol.

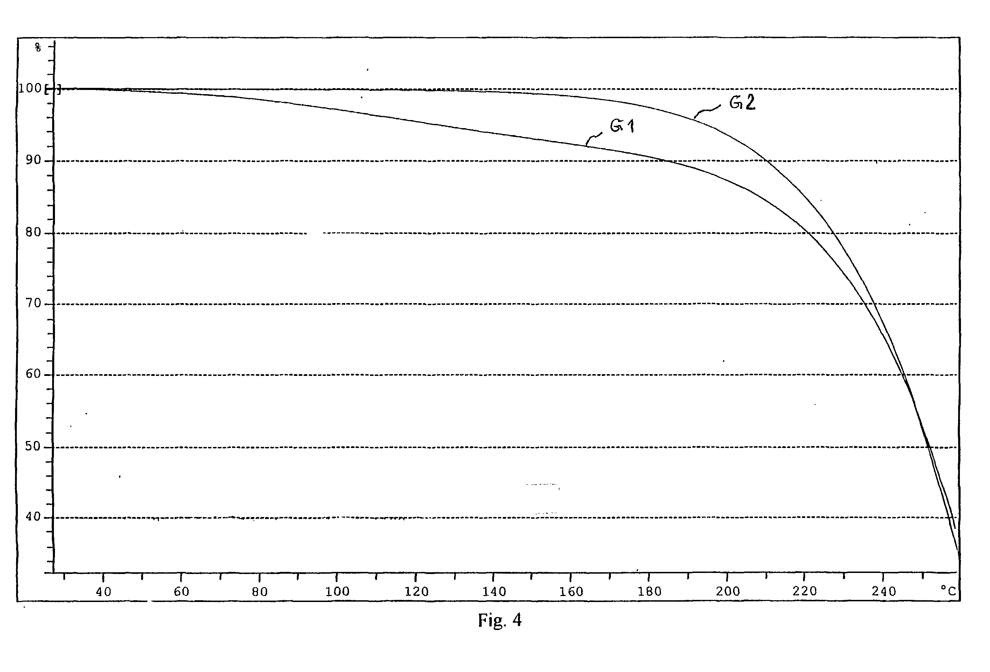

* La Fig. 4 montre l'évolution du rapport (masse de glycérine à la température T de chauffage de la glycérine / masse de glycérine à une température ambiante initiale d'environ 25° C) en fonction de ladite température T de chauffage (variant sensiblement de 25° C à 250° C), pour:
- de la glycérine dite " technique " (courbe " G1 " sur la Fig. 4), c'est-à-dire comprenant de la glycérine selon une fraction massique de 90 % et de l'eau selon une fraction massique de 10 %, ladite glycérine " technique " présentant une masse initiale de 32,74 mg à la température ambiante, et pour
- de la glycérine pure (courbe " G2 " sur la Fig. 4), qui présente une masse initiale de 40,15 mg à la température ambiante.

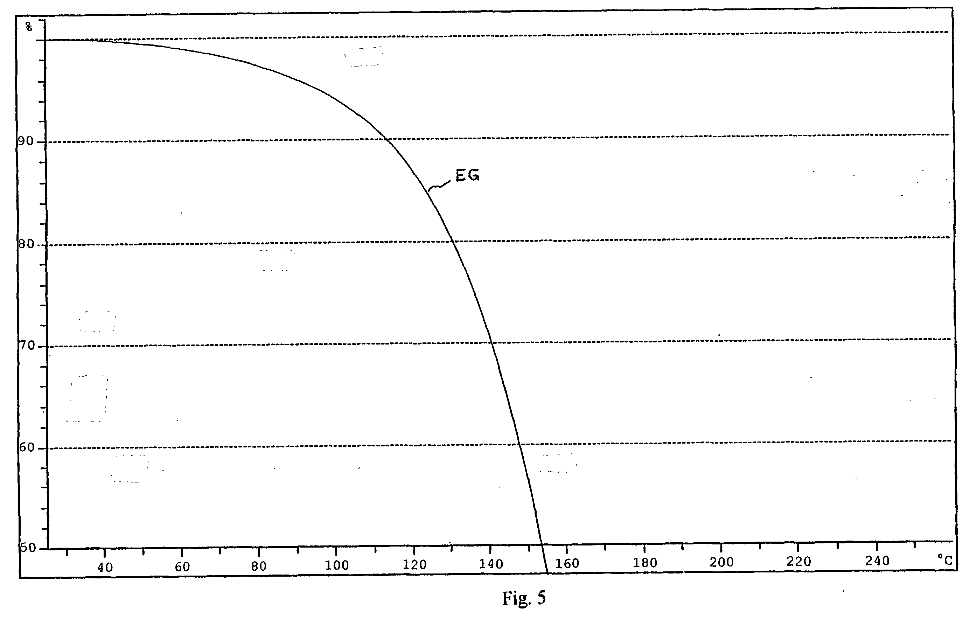

* La Fig. 5 montre de la même manière l'évolution du rapport (masse d'éthylène glycol à la température T / masse d'éthylène glycol à une température ambiante d'environ 25° C) en fonction de la température T (variant sensiblement de 25° C à 250° C), pour de l'éthylène glycol pur présentant une masse initiale de 13,79 mg à la température ambiante.

On a utilisé pour ces mesures une nacelle immobile destinée à contenir les produits à chauffer, et un appareillage d'analyse thermique "METTLER TOLEDO ".

On déduit de ces Figs. 4 et 5 que la moitié de la masse initiale de glycérine ("technique" ou pure) n'a disparu qu'à une température très élevée, de l'ordre de 250° C, alors que la moitié de la masse initiale d'éthylène glycol a déjà disparu à une température proche de 150° C seulement.

◇ On a par ailleurs procédé à des essais comparatifs de roulage sur une rouleuse, dans le but d'étudier l'effet d'un vieillissement thermique sur l'endurance en roulage à plat de deux enveloppes respectivement pourvues d'une composition lubrifiante selon ledit premier exemple de l'invention et d'une composition lubrifiante connue.

Cette dernière comprend un agent lubrifiant, qui est présent sous la forme d'une fraction majoritaire soluble dans le tétrachlorure de carbone et qui est à base de polyalcène glycols et de nonylphénol éthoxylé, et elle comprend également un agent épaississant, qui est présent sous la forme d'une fraction minoritaire insoluble dans le tétrachlorure de carbone et qui comprend des ions calcium et du stéarate.

On a opéré un vieillissement thermique dans une étuve chauffée à 55° C pendant 2 mois et, pour diverses masses de chaque composition lubrifiante appliquée sur la face interne d'une enveloppe, on a évalué la distance de roulage à plat en stoppant le roulage pour une augmentation de la flèche de 1,5 m.

La rouleuse présentait un diamètre de 1,59 m, et les conditions de roulage étaient les suivantes:
- charge de 530 kg;
- vitesse de 75 km/h;
- température ambiante: 20° C.

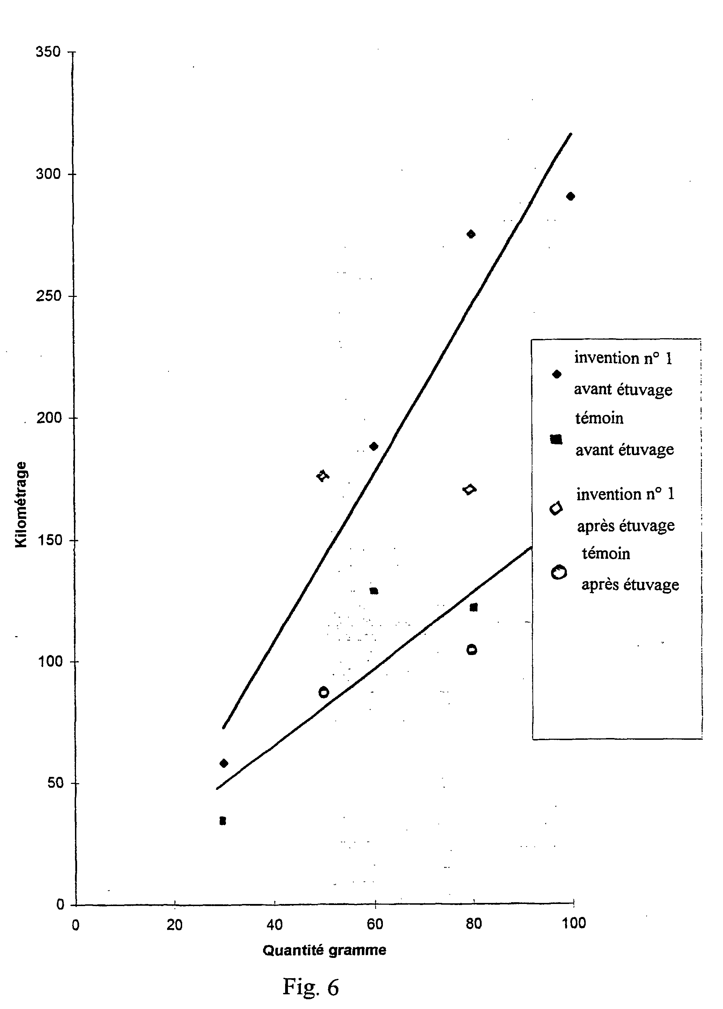

La Fig. 6 représente les résultats obtenus pour la composition selon le premier exemple de l'invention (" invention n° 1 ", avant et après étuvage) et pour ladite composition connue (" témoin ", avant et après étuvage).

Cette Fig. 6 montre qu'après vieillissement thermique, l'endurance d'une enveloppe pourvue d'une composition lubrifiante selon le premier exemple de l'invention (à base de glycérine) est toujours supérieure à celle d'une enveloppe pourvue d'une composition lubrifiante connue à base de polyalcène glycols, pour une même masse de composition lubrifiante appliquée variant de 30 g à 100 g environ.

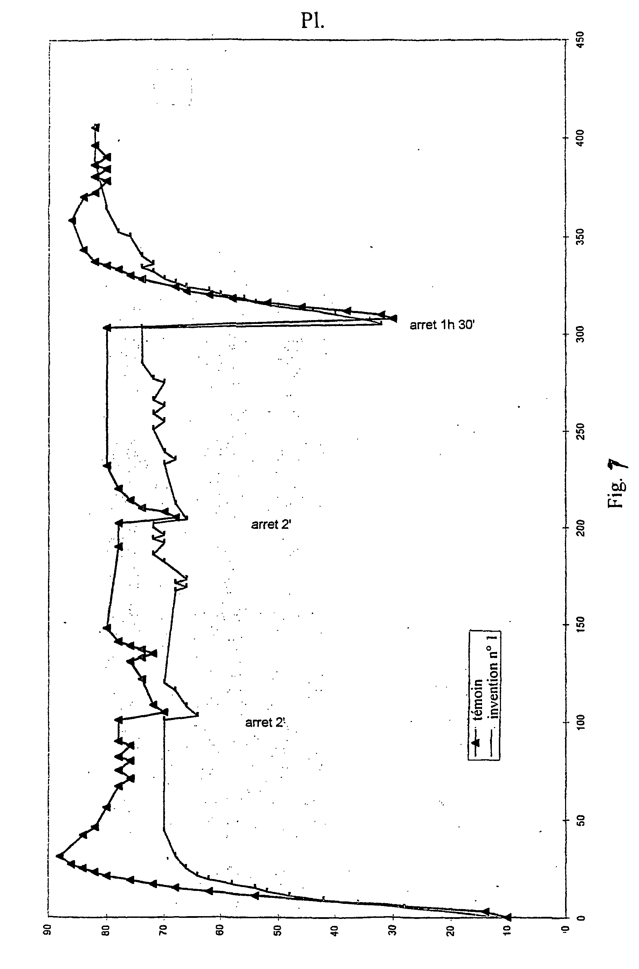

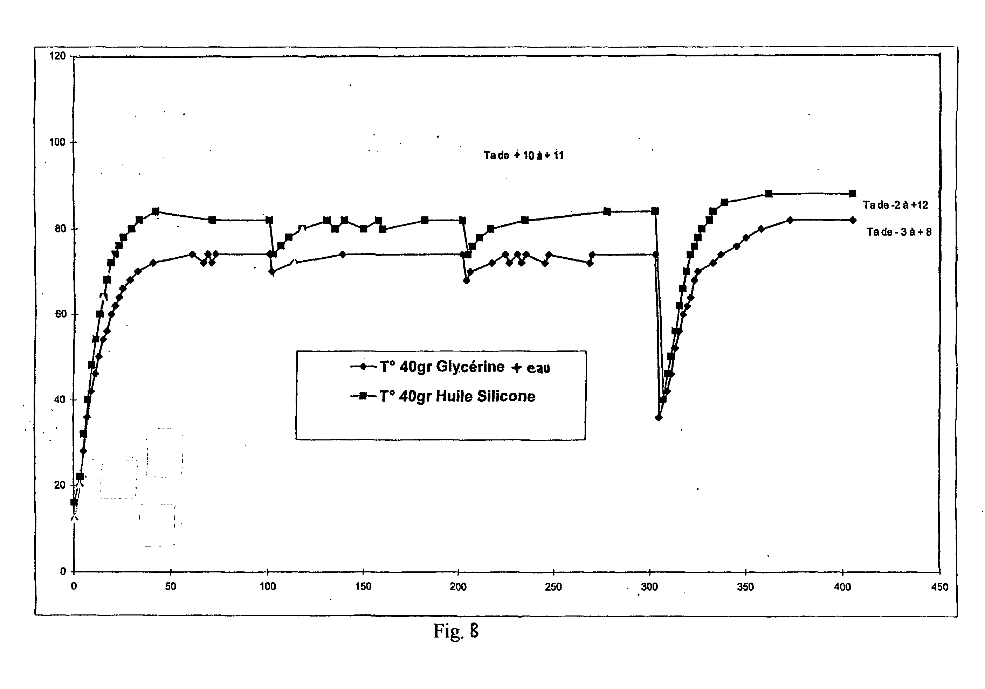

◇ On a procédé en outre à d'autres essais de roulage à plat dans des conditions analogues à celles précitées en relation avec la Fig. 3, mais à des températures de l'air ambiant qui sont très inférieures à celles caractérisant les essais de cette Fig. 3. Les résultats de ces nouveaux essais à basse température sont illustrés aux Figs. 7 et 8.

On a utilisé à cet effet le même véhicule " PEUGEOT 806 " dont la roue avant droite est pourvue d'un appui tel que celui précité, et d'une enveloppe de pneumatique revêtue d'une composition lubrifiante à tester, et l'on a mesuré l'évolution, en fonction du kilométrage parcouru, de la différence de température entre la température interne du pneumatique avant-droit, qui roule dès l'origine à une pression interne nulle, et la température ambiante.

Les conditions de roulage à plat étaient les suivantes pour chacun de ces essais:
- charge sur la roue: 530 kg;
- vitesse moyenne de roulage: 80 km/h;
- distance maximale de roulage: 405 km;
- température ambiante pour le roulage: de -2° C à 5° C pour les essais illustrés à la Fig. 7, et de 10° C à 11° C pour les essais illustrés à la Fig. 8;
- roulage sur un circuit de type autoroutier.

On notera que le véhicule a marqué, pour chacun des essais réalisés, trois arrêts aux kilomètres 100, 200 et 300 (respectivement de 2 min., 2 min. et 1 h 30 min.), ce qui se traduit par une chute de la différence (Tᵢₙₜₑᵣₙₑ - T_{ambiante}) à chacune de ces distances de roulage.

* Dans une première série d'essais à basse température (Fig. 7), on a respectivement appliqué sur deux enveloppes de pneumatiques 60 g de la composition selon le premier exemple de l'invention (à base de glycérine selon une fraction massique de 88,6 %) et 60 g de ladite composition connue à base de polyalcène glycols.

Il ressort de la Fig. 7 qu'après 20 km de roulage à plat environ, l'ensemble monté selon le premier exemple de l'invention (" invention n° 1 " à la Fig. 7) présente un échauffement interne qui augmente plus lentement que celui de l'ensemble monté connu (" témoin " à la Fig. 7), lequel s'échauffe très rapidement pour atteindre au bout de 30 km seulement une température interne proche de 90° C.

On notera que la température interne de l'ensemble monté selon le premier exemple de l'invention demeure toujours inférieure à celle de cet ensemble monté connu, pendant les 300 km du roulage à plat.

En d'autres termes, la composition lubrifiante selon l'invention permet de conférer à l'ensemble monté correspondant une lubrification et, par conséquent, une endurance en roulage à plat améliorées par rapport à celles conférées par la présence d'un agent lubrifiant connu à base de polyalcène glycols.

* Dans une seconde série d'essais à basse température (Fig. 8), on a respectivement appliqué sur deux enveloppes de pneumatiques 40 g de l'agent lubrifiant de la composition selon le premier exemple de l'invention (constitué de 90 % de glycérine et de 10 % d'eau, en fractions massiques) et 40 g d'un agent lubrifiant non conforme à l'invention à base d'huile silicone, en vue de comparer les échauffements correspondants en roulage à plat.

Cet agent lubrifiant à base d'huile de silicone est commercialisé sous la dénomination " SILICONE FLUIDE 47V300 " par la société RHODIA, et il présente une viscosité de 350 centistokes à 25° C.

Il ressort de la Fig. 8 qu'après 20 km de roulage à plat environ, l'ensemble monté selon le premier exemple de l'invention (" glycérine + eau " à la Fig. 8) présente un échauffement interne qui augmente plus lentement que celui de l'ensemble monté pourvu d'huile silicone, lequel s'échauffe très rapidement pour atteindre au bout de 30 km seulement une température interne proche de 80° C.

Comme précédemment, on notera que la température interne de l'ensemble monté selon le premier exemple de l'invention demeure toujours inférieure à celle de cet ensemble monté pourvu d'huile silicone, pendant les 300 km du roulage à plat.

En d'autres termes, l'agent lubrifiant selon l'invention permet de conférer à l'ensemble monté correspondant une lubrification et, par conséquent, une endurance en roulage à plat améliorées par rapport à celles conférées par la présence d'un agent lubrifiant non conforme à l'invention, à base d'huile silicone.

On notera que le polysaccharide de type gomme xanthane qui est avantageusement utilisé dans les compositions lubrifiantes selon l'invention confère des propriétés d'épaississement satisfaisantes à l'agent lubrifiant spécifique de l'invention, qui est à base de glycérine.

On notera également que dans le cas de l'utilisation d'un agent lubrifiant non aqueux (constitué de glycérine pure) dans la composition lubrifiante de l'invention, la fraction massique d'agent épaississant dans cette composition pourrait varier dans un domaine de fraction massique plus étendu que le domaine précité allant de 1 % à 2 %, tout en empêchant le coulage de la composition avant le roulage à plat et en préservant la lubrification en roulage à plat.

On notera par ailleurs que les compositions lubrifiantes selon l'invention sont solubles dans l'eau, ce qui permet de procéder à des lavages de la jante ou de l'enveloppe d'un ensemble monté pourvu d'une telle composition, en cas de tachage de la jante, de la face externe de l'enveloppe ou bien en vue d'une réparation.

## Revendications

1. Composition lubrifiante utilisable pour lubrifier une interface entre une enveloppe de pneumatique et un appui de sécurité (1) monté sur une jante de roue à l'intérieur de ladite enveloppe, ladite composition comprenant essentiellement, d'une part, un agent lubrifiant aqueux ou non et, d'autre part, un polysaccharide destiné à épaissir ledit agent lubrifiant,
**caractérisée en ce que** ledit agent lubrifiant comprend de la glycérine selon une fraction massique égale ou supérieure à 60 %, ledit agent lubrifiant étant présent dans ladite composition selon une fraction massique comprise entre 95 % et 99 %.

2. Composition lubrifiante selon la revendication 1, **caractérisée en ce que** ledit agent lubrifiant est aqueux, ladite glycérine étant présente dans ledit agent lubrifiant selon une fraction massique égale ou supérieure à 70 %, lequel comprend également de l'eau selon une fraction massique inférieure ou égale à 30 %.

3. Composition lubrifiante selon une des revendications précédentes, **caractérisée en ce que** ledit polysaccharide est présent dans ladite composition selon une fraction massique comprise entre 1 % et 2 %.

4. Composition lubrifiante selon la revendication 3, **caractérisée en ce que** ledit polysaccharide est présent dans ladite composition selon une fraction massique comprise entre 1,5 % et 1,7 %.

5. Composition lubrifiante selon une des revendications précédentes, **caractérisée en ce qu'**elle présente une viscosité à 25° C et à la pression atmosphérique, mesurée selon la technique " Brookfield " au moyen d'un mobile de dénomination " LV4 ", qui est comprise entre 100 000 centipoises et 160 000 centipoises.

6. Composition lubrifiante selon une des revendications précédentes, **caractérisée en ce que** ledit polysaccharide est une gomme xanthane.

7. Composition lubrifiante selon une des revendications précédentes, **caractérisée en ce qu'**elle comprend au moins un agent tensio-actif qui est présent dans ladite composition selon une fraction massique inférieure ou égale à 0,2 %.

8. Composition lubrifiante selon la revendication 7, **caractérisée en ce que** ledit agent tensio-actif est un sel d'un métal alcalin d'un acide alkyl aryl sulfonique.

9. Ensemble monté pour véhicule automobile comportant une jante, un appui de sécurité qui est monté sur ladite jante et dont au moins la face radialement externe est constituée d'un matériau élastomère ou plastique, et une enveloppe de pneumatique montée sur ladite jante autour dudit appui, ladite jante présentant en chacun de ses deux bords périphériques un siège de jante sur lequel est monté un bourrelet de ladite enveloppe, ladite jante comportant entre ses deux sièges une portée recevant ledit appui,
**caractérisé en ce qu'**il est pourvu d'une composition lubrifiante selon une des revendications précédentes.

10. Ensemble monté selon la revendication 9, **caractérisé en ce qu'**il est pourvu d'une composition lubrifiante sur la face interne de ladite enveloppe.

## Patentansprüche

1. Gleitmittelzusammensetzung, die zum Schmieren einer Grenzfläche zwischen einem Luftreifen und einer im Inneren dieses Luftreifens auf einer Radfelge montierten Sicherheitsauflage (1) verwendet werden kann, wobei die Zusammensetzung im Wesentlichen einerseits ein wässeriges oder nicht wässeriges Gleitmittel und andererseits ein Polysaccharid enthält, das das Gleitmittel verdicken soll, **dadurch gekennzeichnet, dass** das Gleitmittel Glycerin in einem Massenanteil von größer oder gleich 60 % enthält, wobei das Gleitmittel in der Zusammensetzung in einem Massenanteil im Bereich von 95 bis 99 % vorliegt.

2. Gleitmittelzusammensetzung nach Anspruch 1, **dadurch gekennzeichnet, dass** das Gleitmittel wässerig ist, wobei das Glycerin in dem Gleitmittel in einem Massenanteil von größer oder gleich 70 % vorliegt und wobei das Gleitmittel ferner Wasser in einem Massenanteil von kleiner oder gleich 30 % enthält.

3. Gleitmittelzusammensetzung nach einem der vorhergehenden Ansprüche, **dadurch gekennzeichnet, dass** das Polysaccharid in der Zusammensetzung in einem Massenanteil von 1 bis 2 % vorliegt.

4. Gleitmittelzusammensetzung nach Anspruch 3, **dadurch gekennzeichnet, dass** das Polysaccharid in der Zusammensetzung in einem Massenanteil von 1,5 bis 1,7 % vorliegt.

5. Gleitmittelzusammensetzung nach einem der vorhergehenden Ansprüche, **dadurch gekennzeichnet, dass** sie bei 25 °C und Atmosphärendruck eine nach dem "Brookfield"-Verfahren mit einem mobilen Teil mit der Bezeichnung "LV4" bestimmte Viskosität aufweist, die im Bereich von 100 000 bis 160 000 Centipoise liegt.

6. Gleitmittelzusammensetzung nach einem der vorhergehenden Ansprüche, **dadurch gekennzeichnet, dass** es sich bei dem Polysaccharid um ein Xanthangummi handelt.

7. Gleitmittelzusammensetzung nach einem der vorhergehenden Ansprüche, **dadurch gekennzeichnet, dass** sie mindestens einen grenzflächenaktiven Stoff enthält, der in der Zusammensetzung in einem Massenanteil von kleiner oder gleich 0,2 % vorliegt.

8. Gleitmittelzusammensetzung nach Anspruch 7, **dadurch gekennzeichnet, dass** es sich bei dem grenzflächenaktiven Stoff um ein Alkalimetallsalz einer Alkylarylsulfonsäure handelt.

9. Montierte Einheit für Kraftwagen, die eine Felge, eine Sicherheitsauflage, die auf der Felge montiert ist, wobei zumindest die in radialer Richtung außen liegende Seite der Auflage aus einem elastomeren Material oder Kunststoff besteht, und einen um die Auflage herum auf der Felge montierten Luftreifen umfasst, wobei die Felge auf ihren beiden Außenrändern jeweils einen Felgensitz aufweist, auf dem ein Wulst des Luftreifens montiert ist, und wobei die Felge zwischen ihren beiden Sitzen ein Bett aufweist, das die Auflage aufnimmt, **dadurch gekennzeichnet, dass** sie mit einer Gleitmittelzusammensetzung nach einem der vorhergehenden Ansprüche versehen ist.

10. Montierte Einheit nach Anspruch 9, **dadurch gekennzeichnet, dass** sie auf der Innenseite des Luftreifens mit einer Gleitmittelzusammensetzung versehen ist.

## Claims

1. A lubricating composition usable for lubricating an interface between a tyre and a safety support (1) mounted on a wheel rim within said tyre, said composition comprising essentially, firstly, a lubricating agent, whether aqueous or not, and, secondly, a polysaccharide intended to thicken said lubricating agent,
**characterised in that** said lubricating agent comprises glycerine in a mass fraction equal to or greater than 60%, said lubricating agent being present in said composition in a mass fraction of between 95% and 99%.

2. A lubricating composition according to Claim 1, **characterised in that** said lubricating agent is aqueous, said glycerine being present in said lubricating agent in a mass fraction equal to or greater than 70%, which also contains water in a mass fraction less than or equal to 30%.

3. A lubricating composition according to one of the preceding claims, **characterised in that** said polysaccharide is present in said composition in a mass fraction of between 1% and 2%.

4. A lubricating composition according to Claim 3, **characterised in that** said polysaccharide is present in said composition in a mass fraction of between 1.5% and 1.7%.

5. A lubricating composition according to one of the preceding claims, **characterised in that** it has a viscosity at 25°C and at atmospheric pressure, measured in accordance with the "Brookfield" technique by means of a spindle designated "LV4", which is of between 100,000 centipoise and 160,000 centipoise.

6. A lubricating composition according to one of the preceding claims, **characterised in that** said polysaccharide is a xanthan gum.

7. A lubricating composition according to one of the preceding claims, **characterised in that** it comprises at least one surfactant which is present in said composition in a mass fraction less than or equal to 0.2%.

8. A lubricating composition according to Claim 7, **characterised in that** said surfactant is an alkali metal salt of an alkyl aryl sulphonic acid.

9. A mounted assembly for an automobile comprising a rim, a safety support which is mounted on said rim and at least the radially outer face of which is formed of an elastomeric or plastics material, and a tyre mounted on said rim around said support, said rim having on each of its two peripheral edges a rim seat on which is mounted a bead of said tyre, said rim comprising between its two seats a bearing surface receiving said support,
**characterised in that** it is provided with a lubricating composition according to one of the preceding claims.

10. A mounted assembly according to Claim 9, **characterised in that** it is provided with a lubricating composition on the inner face of said tyre.
